# EUROPÄISCHE PATENTSCHRIFT

(11) **EP 3 912 859 B1**
(45) Veröffentlichungstag und Bekanntmachung des Hinweises auf die Patenterteilung: **25.10.2023**
(21) Anmeldenummer: 21174115.2
(22) Anmeldetag: 17.05.2021
(51) Int. Cl.: B60P 7/08

(54) **ZURRKASSETTENMODUL**
LASHING CARTRIDGE MODULE
MODULE DE CASSETTE D'ARRIMAGE

(30) Priorität: 18.05.2020 DE 202020102820 U
(43) Veröffentlichungstag der Anmeldung: 24.11.2021
(73) Patentinhaber: Thiele GmbH & Co. KG, 58640 Iserlohn (DE)
(72) Erfinder: NORPOTH, Bernhard, 45309 Essen (DE)
(74) Vertreter: Osterhoff, Utz

(56) Entgegenhaltungen:
- EP-B1- 3 369 949
- DE-B4-102018 120 509
- DE-U1-202006 007 916
- DE-U1-202006 007 916
- US-B1- 6 783 313

## Beschreibung

Die vorliegende Erfindung betrifft einen Zurrpunkt an einer Ladefläche eines Transportfahrzeuges gemäß den Merkmalen im Oberbegriff von Anspruch 1.

Aus dem Stand der Technik ist es bekannt, zum lösbaren Befestigen von Zurrmitteln Zurrpunkte bzw. Anschlagpunkte zu verwenden. Insbesondere bei der Befestigung von Lasten bzw. Ladungen auf einem Transportfahrzeug werden solche Zurrpunkte an oder in der Ladefläche angeordnet. Ein solches Transportfahrzeug ist in der Regel ein Auflieger eines Lastkraftwagens.

Beispielsweise ist aus der DE 20 2008 008 418 U1 und der DE 20 2006 007 916 U1 ein jeweils gattungsbildender Zurrpunkt in einer Begrenzung einer Ladefläche eines Transportfahrzeuges bekannt. Der gesamte Inhalt vorbezeichneter Gebrauchsmusterschrift wird durch Referenz mit in den Offenbarungsgehalt dieses Dokumentes einbezogen.

Ein solcher Zurrpunkt ist somit in einer Ruheposition versenkt gelagert, so dass er nicht gegenüber einer Ladefläche oben oder seitlich übersteht. Das Rangieren von Ladung auf der Ladefläche ist ohne Beeinflussung durch den Zurrpunkt möglich.

Auch ein anwendender Monteur kann somit über die Ladefläche laufen, ohne über einen entsprechenden Zurrpunkt zu stolpern.

Wird nunmehr der Zurrpunkt zum Befestigen eines Zurrmittels gebraucht, so ist er in eine Gebrauchsposition zu bringen, welche nachfolgend auch Montageposition bzw. Montagestellung genannt wird. Hierzu wird der Ösenkörper des Zurrpunktes aus einer Kassette herausgezogen und das Zurrmittel mit diesem gekoppelt. In der Regel wird ein Haken in den Ösenkörper eingehakt. Nachteilig ist, dass durch Einwirken der Schwerkraft die Zurröse alleine oder teilweise selbst mit montiertem, noch losem, Zurrmittel wieder eigenständig in die Ruheposition fällt und der Monteur zur korrekten Montage bereits eine Hand für das Fixieren der Zurröse nutzen muss. Das Spannen des Zurrmittels gestaltet sich dadurch ungleich schwieriger.

Die Kassetten sind selbst als Schweißbauteil ausgebildet. Ist die Kassette mit dem Ösenkörper zusammengesetzt, so wird dies als eine Baueinheit an- bzw. in der Ladefläche des Transportfahrzeuges verschweißt, ohne dass der Ösenkörper demontierbar ist.

Aus der US 6 783 313 B1 ist ein Ösenkörper bekannt, der durch rotatorische Schwenkbewegung von einer Ruheposition in einer Montageposition bringbar ist. Hiebei ist ein Federclip vorgesehen, sodass der Ösenkörper bei Überwindung der Federkraft in der Montagepositon gehalten ist.

EP 3 369 949 B1 offenbart den Oberbegriff von Anspruch 1.

Aufgabe der vorliegenden Erfindung ist es, ausgehend vom Stand der Technik eine Möglichkeit aufzuzeigen, einen gattungsbildenden Zurrpunkt in der Anwendung zu verbessern.

Die zuvor genannte Aufgabe wird erfindungsgemäß bei einem Zurrpunkt mit den Merkmalen im Anspruch 1 gelöst.

Vorteilhafte Ausgestaltungen der Erfindung sind in den abhängigen Ansprüchen beschrieben.

Der Zurrpunkt wird an oder in einer Ladefläche eines Transportfahrzeuges angeordnet. Dies bedeutet, er kann beispielsweise in einen umlaufenden Rahmen der Ladefläche eingeschweißt werden. Er kann jedoch auch innerhalb der Ladefläche oder seitlich an der Ladefläche angebracht werden.

Der Zurrpunkt ist dazu geeignet, mit einem Zurrmittel gekoppelt zu werden. Hierzu weist der Zurrpunkt einen Ösenkörper auf, der relativ beweglich in einer Kassette gelagert ist. Der Ösenkörper kann von einer in der Kassette befindlichen Ruheposition in eine Montage- bzw. Gebrauchsposition gebracht werden. Hierzu wird der Ösenkörper aus der Kassette zumindest teilweise herausgezogen. In Einbauposition des Zurrpunktes an der Ladefläche ist dies im Wesentlichen in Vertikalrichtung. Die Kassette weist dazu in seitlich angeordneten Kulissenblechen eine Kulissenführung auf. Der Ösenkörper selbst weist seitlich über den Ösenkörper überstehende Arme auf, die in die Kulissenführung eingreifen und bei der Herausziehbewegung durch diese geführt sind. Die Kulissenführung begrenzt zugleich mit einem unteren Teilbereich die Ruheposition. Die Kulissenführung begrenzt weiterhin mit einem oberen Teilbereich die Gebrauchsposition.

Im Sinne der Erfindung ist unter Montagestellung bzw. Montageposition eine Position des Ösenkörpers zu verstehen, sodass dieser mit einem Zurrmittel gekoppelt werden kann. Unter Montageposition ist somit nicht eine Erstmontage bzw. ein Einbau von Zurrösen bzw. Kassette in die Ladefläche zu verstehen. Die Gebrauchsposition ist dann die Position, die die Zurröse einnimmt, wenn diese mit einer Zurrkraft beaufschlagt ist. Insbesondere kommen die Arme der Zurröse als Widerlager in der Kulisse zur Anlage.

Damit nunmehr die Handhabung verbessert ist, ist erfindungsgemäß vorgesehen, dass ein federelastisches Mittel, insbesondere federelastisches Spannmittel, derart angeordnet ist, dass der Ösenkörper in einer Montageposition bzw. Gebrauchsposition in der Kassette gehalten ist. Alternativ oder ergänzend ist vorgesehen, dass in der Ruheposition der Ösenkörper durch ein federelastisches Mittel, insbesondere federelastisches Spannmittel, gehalten ist.

Wird somit erfindungsgemäß der Ösenkörper von der Ruhestellung in die Montagestellung geführt, so wird er in der Montagestellung durch das federelastische Mittel gehalten. Insbesondere bei Überführen in die Gebrauchsposition überschreitet der Ösenkörper die Federkraft des federelastischen Mittels und wird dann durch das federelastische Mittel gehalten. Hierzu ist insbesondere das federelastische Mittel als Spangenblech bzw. Spange oder Blechspange ausgebildet. Das federelastische Spannmittel ist zumindest teilweise in der Kulissenführung angeordnet. Ganz besonders bevorzugt wird das federelastische Spannmittel in einem oberen Teil der Kulissenführung angeordnet und insbesondere sind zwei federelastische Spannmittel angeordnet. In einer jeden Kulissenführung ist somit in einem oberen Bereich ein federelastisches Spannmittel angeordnet.

Der Ösenkörper kann somit aus der Ruhestellung in die Montagestellung überführt werden und wird in der Montagestellung durch das federelastische Spannmittel gehalten.

In einer vorteilhaften Weiterbildung kann das federelastische Spannmittel derart angeordnet sein, dass der Ösenkörper in der Montagestellung derart verspannt wird, dass verschiedene Positionen, insbesondere stufenlos, eingestellt und gehalten werden, so dass der Ösenkörper durch das federelastische Spannmittel eingespannt ist. Die Handhabung wird somit erheblich für einen anwendenden Monteur verbessert. Er kann zum einen den Ösenkörper in die Montagestellung bringen, wobei der Ösenkörper in der Montagestellung gehalten ist. Weiterhin kann der Ösenkörper in der Montagestellung um eine durch die Arme aufgespannte Achse geschwenkt werden und in der jeweiligen Schwenkposition gehalten bzw. arretiert werden.

Eine weitere Alternative oder ergänzende Ausführungsform sieht vor, dass ein federelastisches Spannmittel in einem unteren Bereich der Kulissenführung angeordnet ist. Hierdurch wird der Ösenkörper in einer Ruhestellung eingespannt gehalten. Nachfolgender, wesentlicher Vorteil wird erreicht. Wird ein Tieflader über die Straße bewegt und/oder insbesondere über eine unebene Fahrbahn, so treten bei nicht benutzten Zurrpunkten, die sich in Ruhestellung befinden, keine Klappergeräusche auf, da die Ösenkörper eingespannt in der Ruhestellung gehalten werden.

Hierzu ist insbesondere ein Spangenblech vorgesehen, so dass das Spangenblech zum einen, einen unteren Teil der Kulissenführung ausbildet. Dies ermöglicht es, den Ösenkörper nach dem Einschweißen der Kassette erst nachträglich einzusetzen und/oder im Verschleiß- oder Reparaturfall zu ersetzen. Gleichzeitig bildet das Spangenblech auch das federelastische Spannmittel mit aus, so dass der Ösenkörper durch bloßes Herunterschieben in der Kulissenführung gleichzeitig in einer eingespannten Position gehalten wird.

Weitere Vorteile, Merkmale, Eigenschaftenund Aspekte der vorliegenden Erfindung sind Gegenstand der nachfolgenden Beschreibung. Bevorzugte Ausgestaltungen werden in den schematischen Figuren dargestellt. Diese dienen dem einfachen Verständnis der Erfindung.
- Figur 1: zeigt eine perspektivische Seitenansicht auf einen erfindungsgemäßen Zurrpunkt in perspektivischer Ansicht,
- Figur 2: zeigt eine Seitenansicht auf einen erfindungsgemäßen Zurrpunkt jeweils in Montagestellung,
- Figur 3: zeigt den Ösenkörper in Ruhestellung innerhalb der Kassette,
- Figur 4: zeigt eine Anordnung eines erfindungsgemäßen Zurrpunktes und
- Figur 5: zeigt die Verschraubung über eine Innenseite des Rahmens nach erfolgter Montage.

In den Figuren werden für gleiche oder ähnliche Bauteile dieselben Bezugszeichen verwendet, auch wenn eine wiederholte Beschreibung aus Vereinfachungsgründen entfällt.

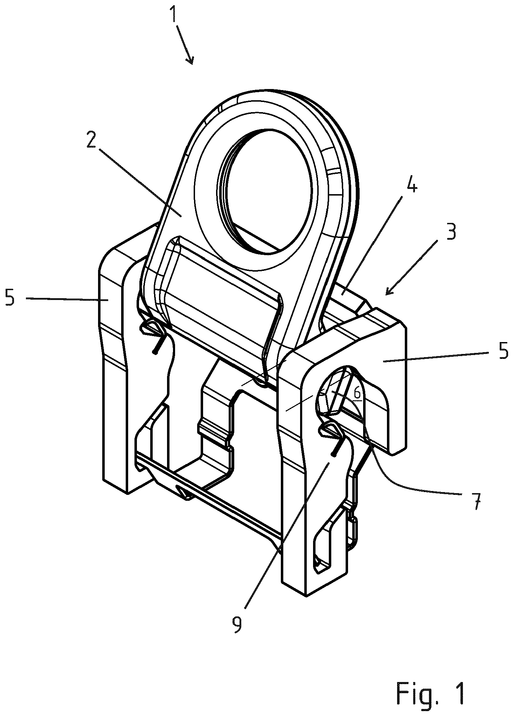

Figur 1 zeigt eine perspektivische Ansicht auf den erfindungsgemäßen Zurrpunkt 1. Der Zurrpunkt 1 selbst weist einen Ösenkörper 2 sowie eine Kassette 3 auf. Die Kassette 3 selbst ein als Schweißbauteil aus einem Stegblech 4 sowie seitlich daran angeordneten Kulissenblechen 5 ausgebildet. In den seitlichen Kulissenblechen 5 ist eine Kulissenführung 6 ausgebildet. Der Ösenkörper 2 selbst weist von diesem seitlich abstehende Arme 7 auf. Die Arme 7 greifen in die Kulissenführung 6 ein und sind in der Kulissenführung 6 geführt.

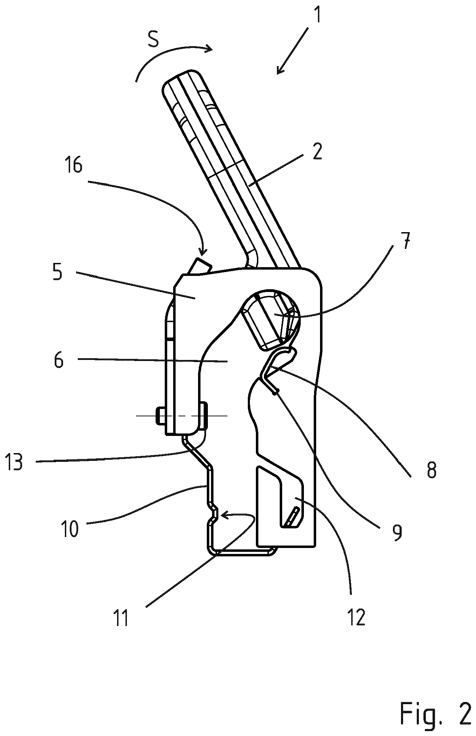

In Figur 1 und 2 ist der Zurrpunkt 1 jeweils in einer Montagestellung dargestellt. Dies bedeutet, dass der Ösenkörper 2 aus der Kassette 3 herausbewegt ist und sich in einem oberen Bereich der Kulissenführung 6 befindet. Damit der Ösenkörper 2 nicht aufgrund der Schwerkrafteinwirkung aus dem oberen Bereich der Kulissenführung 6 von selbst zurückfällt, ist ferner ein federelastisches Spannmittel 8 im oberen Bereich der Kulissenführung 6 angeordnet. Dieses ragt zumindest teilweise in die Kulissenführung 6 hinein. Das federelastische Spannmittel 8 ist in Form eines Spangenbleches ausgebildet. Dieses ist in einen Schlitz 9 in einem Kulissenblech 5 hineingesteckt und hierin angeordnet, insbesondere geklemmt angeordnet. Ist der Ösenkörper 2 in die obere Montagestellung gebracht, so sind die Arme 7 aufgrund des federelastischen Spannmittels 8 in ihrer Position gehalten und dadurch ist der Ösenkörper 2 in der Montagestellung gehalten. Das federelastische Spannmittel 8 kann gemäß Figur 2 derart ausgebildet sein, dass eine Schwenkbewegung S des Ösenkörpers 2 stufenlos arretiert aufgrund einer Klemmkraft in der jeweils eingenommenen Position gehalten wird. Insbesondere ein Zurückrutschen in die Kassette 3 hinein, wird durch das federelastische Spannmittel 8 im oberen Bereich der Kulissenführung 6 verhindert. Bevorzugt wird auch eine stufenlose Klemmung der jeweiligen eingenommenen Position erreicht.

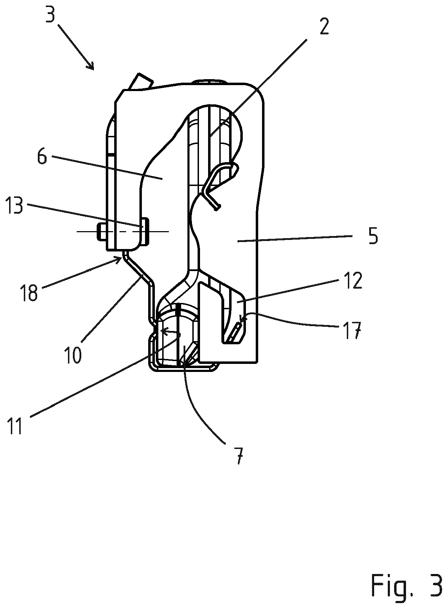

Wird der Ösenkörper 2 in der Montagestellung nicht mehr benötigt, so wird durch Ausüben einer Kraft auf den Ösenkörper 2 in Richtung der Kulisse (Zurückdrücken) die Federkraft des Federspannmittels überschritten und der Ösenkörper 2 zurück in die Kassette 3 hinein bewegt, so dass dieser die Ruhestellung, beispielsweise dargestellt in Figur 3 einnimmt.

Weiterhin dargestellt ist, dass die Kulissenführung 6 in einem unteren Bereich an den Kulissenblechen 5 offen ausgebildet ist. Damit der Ösenkörper 2 in diesem unteren Bereich jedoch nicht aus der Kulissenführung 6 herausfällt, ist ein Sicherungsblech 10 bzw. Schließblech angeordnet. Dieses Sicherungsblech 10 bildet zugleich auch einen Teil der unteren Kulissenführung 6 mit aus.

An dem Sicherungsblech 10 selber ist ein zweites federelastisches Spannmittel 11 ausgebildet, hier in Form einer Ausbuchtung bzw. Ausstülpung oder Sicke in dem Sicherungsblech 10 selber. Der damit zu erreichende Vorteil ist dargestellt in Figur 3. Gemäß Figur 3 ist der Ösenkörper 2 in eine Ruhestellung innerhalb der Kassette 3 gebracht. Der jeweilige Arm 7 ist durch das federelastische Spannmittel 11 in dieser Position eingeklemmt. Die Klemmung erfolgt zwischen Sicherungsblech 10 und Anteil des Kulissenbleches 5. In dieser Ruhestellung bzw. Ruheposition ist der Ösenkörper 2 geklemmt gehalten. Ein Klackern, Klappern oder sonstige Geräuschbildung wird hierdurch sicher vermieden.

Das Sicherungsblech 10 selbst ist derart mit dem Kulissenblech 5 gekoppelt, dass in einer Ausnehmung 12 des Kulissenbleches 5 ein Teil des Sicherungsbleches 10 eingreift. Dies bildet ein Ende 17 des Sicherungsbleches 10 aus. An einem gegenüberliegenden Ende 18 ist das Sicherungsblech 10 mit dem Stegblech 4 verschraubt. Alternativ kann auch eine Koppelung mit dem oder den Kulissenblech/en 5 erfolgen, was jedoch nicht näher dargestellt ist. Wiederum alternativ kann das Sicherungsblech 10 auch mit dem Rahmen 15 gekoppelt werden. Ein weiterer Vorteil des Sicherungsbleches 10 ist, dass der Ösenkörper 2 über einen unteren Bereich der Kulissenführung 6 bei entferntem Sicherungsblech 10 aus der Kassette 3 entnommen werden kann.

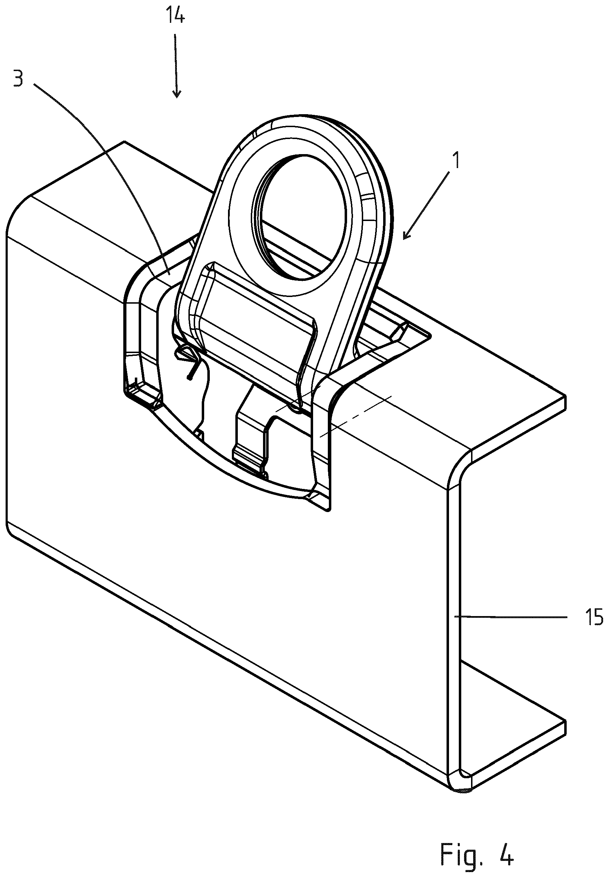

Figur 4 zeigt eine entsprechende Anordnung 14 eines erfindungsgemäßen Zurrpunktes 1 in einem seitlichen Rahmen 15 eines nicht näher dargestellten Tiefladers.

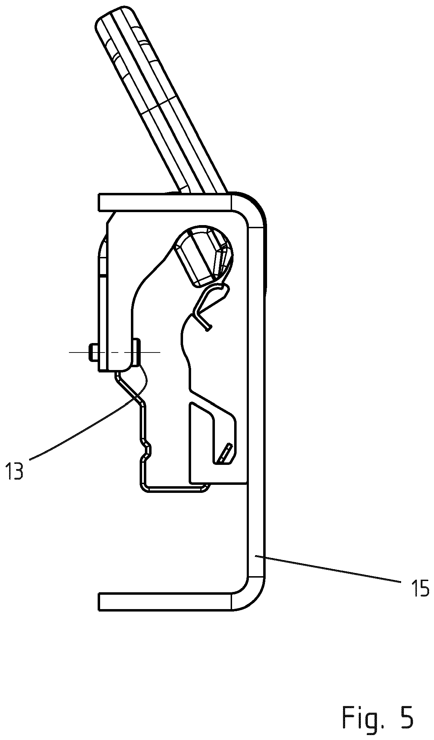

Die Verschraubung 13 des Sicherungsbleches 10 ist über eine Innenseite des Rahmens, insbesondere dargestellt in Figur 5 auch nach erfolgter Montage noch demontierbar. Die Kassette 3 selbst wird als Einschweißbauteil in dem Rahmen 15 verschweißt (nicht näher dargestellt).

Bevorzugt kann beispielsweise an dem Stegblech 4, dargestellt in Figur 2, an einer Oberseite 16 der Ösenkörper 2 nach innen zu einer nicht näher dargestellten Ladefläche verschwenkt, zur Auflage kommen.

### Bezugszeichen:

- 1 -: Zurrpunkt
- 2 -: Ösenkörper
- 3 -: Kassette
- 4 -: Stegblech
- 5 -: Kulissenblech
- 6 -: Kulissenführung
- 7 -: Arme
- 8 -: federelastisches Spannmittel
- 9 -: Schlitz
- 10-: Sicherungsblech
- 11 -: federelastisches Spannmittel
- 12 -: Ausnehmung
- 13 -: Verschraubung
- 14 -: Anordnung
- 15 -: Rahmen
- 16 -: Oberseite
- 17 -: Ende
- 18 -: Ende

- S -: Schwenkbewegung

## Patentansprüche

1. Zurrpunkt (1) an einer Ladefläche eines Transportfahrzeuges, wobei der Zurrpunkt (1) mit einem Zurrmittel gekoppelt wird, indem ein Ösenkörper (2) relativ beweglich in einer Kassette (3) gelagert ist und von einer in der Kassette (3) befindlichen Ruheposition in eine Montage- oder Gebrauchsposition herausziehbar ist, wobei die Kassette (3) in seitlich angeordneten Kulissenblechen (5) eine Kulissenführung (6) aufweist und der Ösenkörper (2) seitlich überstehende Arme (7) aufweist, die in die Kulissenführung (6) eingreifen und der Ösenkörper (2) in der Montageposition durch ein federelastisches Spannmittel (8) gehalten ist und/oder in der Ruheposition durch ein federelastisches Spannmittel (8) gehalten ist, **dadurch gekennzeichnet, dass** das federelastische Spannmittel (8) zumindest teilweise in die Kulissenführung (6) hineinragend, angeordnet ist.

2. Zurrpunkt (1) nach Anspruch 1, **dadurch gekennzeichnet, dass** das federelastische Spannmittel (8, 11) ein Spangenblech ist, welches in einem oberen Teil der Kulissenführung (6) angeordnet ist.

3. Zurrpunkt (1) nach einem der vorangehenden Ansprüche, **dadurch gekennzeichnet, dass** die Arme (7) durch die Federkraft des Spannmittels (8) in einem oberen Abschnitt der Kulissenführung (6) gehalten sind, insbesondere drehbeweglich gehalten sind.

4. Zurrpunkt (1) nach einem der vorangehenden Ansprüche, **dadurch gekennzeichnet, dass** das federelastische Spannmittel (8) im oberen Teil der Kulissenführung (6) in einem Schlitz (9) befestigt ist und mit einem Teil in die Kulissenführung (6) hineinragt.

5. Zurrpunkt (1) nach einem der vorangehenden Ansprüche, **dadurch gekennzeichnet, dass** der Ösenkörper (2) in einer Montageposition in einer beliebigen Stellung durch die Spannkraft des Spannmittels (8) fixiert ist.

6. Zurrpunkt (1) nach einem der vorangehenden Ansprüche, **dadurch gekennzeichnet, dass** in einem unteren Bereich der Kulissenführung (6) ein Sicherungsblech (10) als Verschluss der Kulissenführung (6) angeordnet ist.

7. Zurrpunkt (1) nach einem der vorangehenden Ansprüche, **dadurch gekennzeichnet, dass** in einem unteren Teil der Kulissenführung ein federelastisches Spannmittel (11) zumindest teilweise in die Kulissenführung (6) eingreift, dergestalt, dass die Arme (7) des Ösenkörpers (2) in der Kulissenführung (6) eingespannt gehalten sind.

8. Zurrpunkt (1) nach einem der vorangehenden Ansprüche, **dadurch gekennzeichnet, dass** das federelastische Spannmittel (11) im unteren Bereich der Kulissenführung (6) als Verschlussblech oder Sicherungsblech (10) ausgebildet ist und einen Teil der unteren Kulissenführung (6) selbst mit ausbildet.

9. Zurrpunkt (1) nach dem vorhergehenden Anspruch, **dadurch gekennzeichnet, dass** das Sicherungsblech (10) an einem Ende (17) in eine Ausnehmung (12) des Kulissenbleches (5) eingehakt ist und an einem gegenüberliegenden Ende (18) verschraubt ist.

## Claims

1. Lashing point (1) on a loading surface of a transport vehicle, wherein the lashing point in (1) is coupled with a lashing means, in that an eyelet body (2) is mounted in a carriage (3) so as to be relatively movable and the drawn out from a rest position located in the carriage (3) into an assembly for use position, wherein the carriage (3) has a slide guide (6) in laterally arranged slide plates (5) and the eyelet body (2) has arms (7) which protrude out laterally, which engage in the slide guide (6) and the eyelet body (2) is held in the assembly position by a resilient tensioning means (8) and/or is held in the rest position by a resilient tensioning means (8), **characterised in that** the resilient tensioning means (8) is arranged so as to protrude at least in parts into the slide guide (6).

2. Lashing point (1) according to claim 1, **characterised in that** the resilient tensioning means (8, 11) is a clamping sheet which is arranged in an upper part of the slide guide (6).

3. Lashing point (1) according to any of the preceding claims, **characterised in that** the arms (7) are held by the spring force of the tensioning means (8) in an upper portion of the slide guide (6), in particular are held so as to be rotationally movable.

4. Lashing point (1) according to any of the preceding claims, **characterised in that** the resilient tensioning means (8) is fastened in the upper part of the slide guide (6) in a slot (9) and a part thereof protrudes into the slide guide (6).

5. Lashing point (1) according to any of the preceding claims, **characterised in that** the eyelet body (2) in an assembly position is fixed in a freely selectable position by the tensioning force of the tensioning means (8).

6. Lashing point (1) according to any of the preceding claims, **characterised in that** a securing plate (10) is arranged in a lower region of the slide guide (6) as a closure of the slide guide (6).

7. Lashing point (1) according to any of the preceding claims, **characterised in that** in a lower part of the slide guide a resilient tensioning means (11) engages at least partially into the slide guide (6), such that the arms (7) of the eyelet body (2) are held in a tensioned manner in the slide guide (6).

8. Lashing point (1) according to any of the preceding claims, **characterised in that** the resilient tensioning means (11) is formed in the lower region of the slide guide (6) as a closure plate or securing plate (10) and itself contributes to the formation of a part of the lower slide guide (6).

9. Lashing point (1) according to the preceding claim, **characterised in that** the securing plate (10) is hooked in at one end (17) into a cutout (12) in the slide plate (5) and is screwed at an oppositely situated end (18).

## Revendications

1. Point d'arrimage (1) d'une surface de chargement d'un véhicule de transport, dans lequel le point d'arrimage (1) est couplé à un moyen d'arrimage, en ce qu'un corps d'oeillet (2) est logé de manière relativement mobile dans une cassette (3) et peut être retiré d'une position de repos se trouvant dans la cassette (3) dans une position de montage ou d'utilisation, dans lequel la cassette (3) présente dans des tôles de coulisse (5) agencées latéralement un guide de coulisse (6) et le corps d'oeillet (2) présente des bras (7) en saillie latérale qui s'engagent dans le guide de coulisse (6) et le corps d'oeillet (2) est maintenu dans la position de montage par un moyen de serrage (8) élastique en ressort et/ou est maintenu dans la position de repos par un moyen de serrage (8) élastique en ressort, **caractérisé en ce que** le moyen de serrage (8) élastique en ressort est agencé pénétrant au moins partiellement dans le guide de coulisse (6).

2. Point d'arrimage (1) selon la revendication 1, **caractérisé en ce que** le moyen de serrage (8, 11) élastique en ressort est une tôle à agrafe qui est agencée dans une partie supérieure du guide de coulisse (6).

3. Point d'arrimage (1) selon l'une quelconque des revendications précédentes, **caractérisé en ce que** les bras (7) sont maintenus par la force de ressort du moyen de serrage (8) dans une section supérieure du guide de coulisse (6), en particulier sont maintenus de manière mobile en rotation.

4. Point d'arrimage (1) selon l'une quelconque des revendications précédentes, **caractérisé en ce que** le moyen de serrage (8) élastique en ressort est fixé dans la partie supérieure du guide de coulisse (6) dans une fente (9) et pénètre avec une partie dans le guide de coulisse (6).

5. Point d'arrimage (1) selon l'une quelconque des revendications précédentes, **caractérisé en ce que** le corps d'oeillet (2) est fixé dans une position de montage dans une position quelconque par la force de serrage du moyen de serrage (8).

6. Point d'arrimage (1) selon l'une quelconque des revendications précédentes, **caractérisé en ce que** dans une zone inférieure du guide de coulisse (6), une tôle de sécurité (10) est agencée comme fermeture du guide de coulisse (6).

7. Point d'arrimage (1) selon l'une quelconque des revendications précédentes, **caractérisé en ce que** dans une partie inférieure du guide de coulisse, un moyen de serrage (11) élastique en ressort s'engage au moins partiellement dans le guide de coulisse (6) de telle manière que les bras (7) du corps d'oeillet (2) soient maintenus serrés dans le guide de coulisse (6).

8. Point d'arrimage (1) selon l'une quelconque des revendications précédentes, **caractérisé en ce que** le moyen de serrage (11) élastique en ressort est réalisé dans la zone inférieure du guide de coulisse (6) comme tôle de fermeture ou tôle de sécurité (10) et réalise une partie du guide de coulisse (6) inférieure même.

9. Point d'arrimage (1) selon la revendication précédente, **caractérisé en ce que** la tôle de sécurité (10) est accrochée à une extrémité (17) dans un évidement (12) de la tôle de coulisse (5) et est vissée à une extrémité opposée (18).
